(19) **Europäisches Patentamt / European Patent Office / Office européen des brevets**

(11) **EP 4 733 909 A1**

(12) # EUROPEAN PATENT APPLICATION
published in accordance with Art. 153(4) EPC

(43) Date of publication:
29.04.2026 Bulletin 2026/18

(21) Application number: 24876057.1

(22) Date of filing: 06.06.2024

(51) International Patent Classification (IPC):
*G06F 3/0481* (2022.01)

(52) Cooperative Patent Classification (CPC):
G06F 3/0481; G06F 3/04815; G06F 3/04847;
G06F 3/0488; G06T 13/00

(86) International application number:
PCT/CN2024/097673

(87) International publication number:
WO 2025/077231 (17.04.2025 Gazette 2025/16)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.10.2023 CN 202311333224

(71) Applicant: Huawei Technologies Co., Ltd.
Shenzhen, Guangdong 518129 (CN)

(72) Inventor: DONG, Xiaojie
Shenzhen, Guangdong 518129 (CN)

(74) Representative: Pfenning, Meinig & Partner mbB
Patent- und Rechtsanwälte
Theresienhöhe 11a
80339 München (DE)

(54) **DIAL DISPLAY METHOD AND APPARATUS, AND CHIP, ELECTRONIC DEVICE AND MEDIUM**

(57) This application provides a watch face display method and apparatus, a chip, an electronic device, and a medium. The method includes: obtaining a watch face component, where the watch face component includes a three-dimensional model and a two-dimensional image; displaying a first watch face interface based on the three-dimensional model and the two-dimensional image; receiving a first operation performed by a user on a watch face; and displaying a second watch face interface based on the three-dimensional model and the two-dimensional image in response to the first operation, where a display orientation of the three-dimensional model on the first watch face interface is different from a display orientation of the three-dimensional model on the second watch face interface. This application supports display of a high-precision dynamic watch face on an electronic device that has relatively small memory and a relatively weak computational power.

FIG. 2

EP 4 733 909 A1

**Description**

This application claims priority to Chinese Patent Application No. 202311333224.X, filed with the China National Intellectual Property Administration on October 13, 2023 and entitled "WATCH FACE DISPLAY METHOD AND APPARATUS, CHIP, ELECTRONIC DEVICE, AND MEDIUM", which is incorporated herein by reference in its entirety.

**TECHNICAL FIELD**

This application relates to the field of electronic device technologies, and in particular, to a watch face display method and apparatus, a chip, an electronic device, and a medium.

**BACKGROUND**

Compared with mobile phones, some electronic devices (such as electronic watches) have relatively small memory and relatively weak computational power; therefore, it is difficult to support display of high-precision dynamic watch faces. Therefore, it is necessary to provide a watch face display method applicable to the foregoing electronic devices.

**SUMMARY**

Embodiments of this application provide a watch face display method and apparatus, a chip, an electronic device, and a medium, to support display of a high-precision dynamic watch face on an electronic device that has relatively small memory and a relatively weak computational power.

According to a first aspect, an embodiment of this application provides a watch face display method, including: obtaining a watch face component, where the watch face component includes a three-dimensional model and a two-dimensional image; displaying a first watch face interface based on the three-dimensional model and the two-dimensional image; and displaying a second watch face interface based on the three-dimensional model and the two-dimensional image in response to a first operation performed by a user on a watch face, where a display orientation of the three-dimensional model on the first watch face interface is different from a display orientation of the three-dimensional model on the second watch face interface.

Optionally, displaying the second watch face interface based on the three-dimensional model and the two-dimensional image in response to the first operation performed by the user on the watch face includes: obtaining an operation parameter of the first operation; and determining the display orientation of the three-dimensional model based on the operation parameter.

Optionally, the first operation includes a touch operation, and an operation parameter of the touch operation includes one or more of the following: a displacement magnitude of a touch displacement of the touch operation; a displacement direction of the touch displacement of the touch operation; touch duration of the touch operation; a touch area of the touch operation; and touch pressure of the touch operation.

Optionally, determining the display orientation of the three-dimensional model based on the operation parameter includes: determining an x-axis coordinate value and a y-axis coordinate value of the three-dimensional model in a specified coordinate system based on the displacement magnitude and the displacement direction; and determining a z-axis coordinate value of the three-dimensional model in the specified coordinate system based on at least one of the touch duration, the touch area, and the touch pressure, where a z-axis of the specified coordinate system is perpendicular to a display of the watch face.

Optionally, the first operation includes a viewing angle change operation, and an operation parameter of the viewing angle change operation includes one or more of the following: a line-of-sight rotation direction of the viewing angle change operation; a line-of-sight rotation angle of the viewing angle change operation; and a line-of-sight distance of the viewing angle change operation.

Optionally, determining the display orientation of the three-dimensional model based on the operation parameter includes: determining a rotation direction of the three-dimensional model in a specified coordinate system based on the line-of-sight rotation direction; determining a rotation angle of the three-dimensional model in the specified coordinate system based on the line-of-sight rotation angle; and determining a z-axis coordinate value of the three-dimensional model in the specified coordinate system based on the line-of-sight distance, where a z-axis of the specified coordinate system is perpendicular to a display of the watch face.

Optionally, displaying the second watch face interface based on the three-dimensional model and the two-dimensional image in response to the first operation performed by the user on the watch face includes: determining a display region of the two-dimensional image based on the first operation; and/or determining a display shape of the two-dimensional image based on the first operation; and/or determining a display orientation of the two-dimensional image based on the first operation.

Optionally, the three-dimensional model is used to display a foreground object; and the two-dimensional image includes an image used to display a background object.

Optionally, the three-dimensional model is used to display a dynamic component; and the two-dimensional image is used to display a static component.

According to a second aspect, an embodiment of this application provides a watch face display apparatus, including: an obtaining module, configured to obtain a watch face component, where the watch face component includes a three-dimensional model and a two-dimensional image; and a display module, configured to: display a first watch face interface based on the three-dimensional model and the two-dimensional image; and display a second watch face interface based on the three-dimensional model and the two-dimensional image in response to a first operation performed by a user on a watch face, where a display orientation of the three-dimensional model on the first watch face interface is different from a display orientation of the three-dimensional model on the second watch face interface.

According to a third aspect, an embodiment of this application provides an electronic chip, including a processor, configured to execute computer program instructions stored in a memory. When the computer program instructions are executed by the processor, the electronic chip is triggered to perform the method according to any one of the first aspect.

According to a fourth aspect, an embodiment of this application provides an electronic device. The electronic device includes one or more memories configured to store computer program instructions, and one or more processors. When the computer program instructions are executed by the one or more processors, the electronic device is triggered to perform the method according to any one of the first aspect.

According to a fifth aspect, an embodiment of this application provides a computer-readable storage medium. The computer-readable storage medium stores a computer program. When the computer program is run on a computer, the computer is enabled to perform the method according to any one of the first aspect.

According to a sixth aspect, an embodiment of this application provides a computer program product. The computer program product includes a computer program. When the computer program is run on a computer, the computer is enabled to perform the method according to any one of the first aspect.

In embodiments of this application, the three-dimensional model is a dynamic component of the watch face, and may be used to generate a complex animation effect; and the two-dimensional image is a static component of the watch face, and may not be used to generate an animation effect or may be used to generate a simple animation effect. An electronic watch may present a dynamic watch face display effect by displaying a dynamic component and a static component of a watch face. In addition, in embodiments of this application, a size of the watch face component and an amount of computation can also be reduced, and displaying the watch face based on this can reduce memory consumption and computing resource consumption of the electronic watch. Therefore, embodiments of this application support display of a high-precision dynamic watch face on an electronic device that has relatively small memory and a relatively weak computational power.

## BRIEF DESCRIPTION OF DRAWINGS

To describe the technical solutions in embodiments of this application more clearly, the following briefly describes the accompanying drawings for describing the embodiments.

FIG. 1 is a diagram of a structure of an electronic device according to an embodiment of this application;
FIG. 2 and FIG. 3 are respectively a diagram of a watch face component and a diagram of watch face display when a swing in a 3D model is at rest according to an embodiment of this application;
FIG. 4 and FIG. 5 are respectively a diagram of a watch face component and a diagram of watch face display when a swing in a 3D model swings to a left-rear side according to an embodiment of this application;
FIG. 6 and FIG. 7 are respectively a diagram of a watch face component and a diagram of watch face display when a swing in a 3D model swings to a front side according to an embodiment of this application;
FIG. 8 and FIG. 9 are respectively a diagram of a watch face component and a diagram of watch face display when a swing in a 3D model swings to a rear side according to an embodiment of this application;
FIG. 10 is another diagram of watch face display when a swing in a 3D model is at rest according to an embodiment of this application;
FIG. 11 is another diagram of watch face display when a swing in a 3D model swings to a rear side according to an embodiment of this application;
FIG. 12 is another diagram of watch face display when a swing in a 3D model swings to a front side according to an embodiment of this application;
FIG. 13 is a diagram used to reflect a change of a background image displayed on a watch face when a viewing angle of a user changes according to an embodiment of this application; and
FIG. 14 and FIG. 15 are respectively diagrams of watch face display when a viewing angle of a user is a front view and a non-front view according to an embodiment of this application.

## DESCRIPTION OF EMBODIMENTS

To help better understand the technical solutions of this application, the following describes embodiments of this application in detail with reference to the accompanying drawings.

It should be noted that described embodiments are merely some rather than all of embodiments of this application. All other embodiments obtained by a person of ordinary skill in the art based on embodiments of this application without creative efforts shall fall within the protection scope of this application.

The terms used in embodiments of this application are merely intended to describe specific embodiments, but not intended to limit this application. The terms "a/an", "the", and "this" of singular forms used in embodiments and the appended claims of this application are also intended to include plural forms, unless otherwise specified in the context clearly.

It should be understood that the term "at least one" used in this specification means one or more, and "a plurality of" means two or more. The term "and/or" used in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between associated objects. "At least one of the following items" or a similar expression thereof means any combination of these items, including any combination of singular items or plural items. For example, at least one of a, b, and c may represent a, b, c, a-b, a-c, b-c, or a-b-c, where a, b, and c may be in a singular or plural form.

It should be understood that, although terms such as first and second may be used in embodiments of this application to describe specified thresholds, these specified thresholds should not be limited to these terms. These terms are merely used to distinguish between the specified thresholds. For example, without departing from the scope of embodiments of this application, the first specified threshold may also be referred to as the second specified threshold, and similarly, the second specified threshold may also be referred to as the first specified threshold.

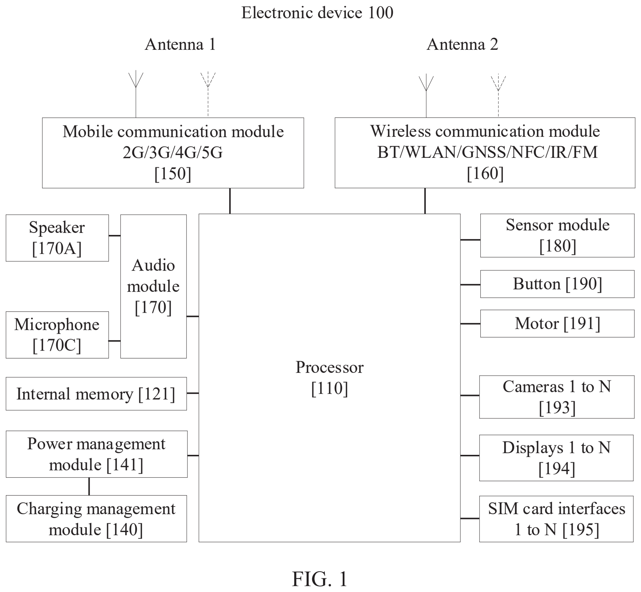

A watch face display method provided in any embodiment of this application may be applied to an electronic device 100 shown in FIG. 1. FIG. 1 is a diagram of a structure of the electronic device 100. In an embodiment, the electronic device 100 may be an electronic watch.

The electronic device 100 may include a processor 110, an internal memory 121, a charging management module 140, a power management module 141, an antenna 1, an antenna 2, a mobile communication module 150, a wireless communication module 160, an audio module 170, a speaker 170A, a microphone 170C, a sensor module 180, a button 190, a motor 191, a camera 193, a display 194, a subscriber identity module (subscriber identity module, SIM) card interface 195, and the like. The sensor module 180 may include a pressure sensor, a gyroscope sensor, an acceleration sensor, a touch sensor, and the like.

It may be understood that the structure shown in this embodiment of this application does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. The controller may generate an operation control signal based on an instruction operation code and a time sequence signal, to complete control over instruction fetching and instruction execution.

In some embodiments, the processor 110 may be an apparatus on chip SOC (System on Chip, system on chip). The processor 110 may include a central processing unit (Central Processing Unit, CPU), or may further include a processor of another type. In some embodiments, the processor 110 may be a PWM control chip.

The processor 110 may further include a necessary hardware accelerator or logic processing hardware circuit, for example, an ASIC, or one or more integrated circuits configured to control program execution in the technical solutions. In addition, the processor 110 may have a function for operating one or more software programs. The software program may be stored in a storage medium.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may invoke the instructions or the data directly from the memory. This avoids repeated access, reduces waiting time of the processor 110, and improves system efficiency.

In some embodiments, the memory of the electronic device 100 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), or may be any computer-readable medium that can be used to carry or store expected program code in a form of an instruction or a data structure and can be accessed by a computer.

In some embodiments, the processor 110 and the memory may be combined into one processing apparatus, or may be components independent of each other. The processor 110 may be configured to execute program code stored in the memory. During specific implementation, the memory may alternatively be integrated into the processor 110, or may be independent of the processor 110.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive a charging input from a charger. The power management module 141 is configured to connect to the charging management module 140 and the processor 110.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused to improve antenna utilization. For example, the antenna 1 may be reused as a diversity antenna in a wireless local area network. In some other embodiments, the antenna may be used in combination with a tuning switch.

The mobile communication module 150 may provide a wireless communication solution including 2G/3G/4G/5G or the like and applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the processed electromagnetic wave to the modem processor for demodulation. The mobile communication module 150 may further amplify a signal modulated by the modem processor, and convert the amplified signal through the antenna 1 into an electromagnetic wave for radiation. In some embodiments, at least some functional modules in the mobile communication module 150 may be disposed in the processor 110. In some embodiments, at least some functional modules in the mobile communication module 150 and at least some modules in the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like and applied to the electronic device 100. The wireless communication module 160 may be one or more components integrating at least one communication processing module. The wireless communication module 160 receives an electromagnetic wave through the antenna 2, performs frequency modulation and filtering processing on an electromagnetic wave signal, and sends the processed signal to the processor 110. The wireless communication module 160 may further receive a to-be-sent signal from the processor 110, perform frequency modulation and amplification on the signal, and convert the signal through the antenna 2 into an electromagnetic wave for radiation.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, the GNSS, the WLAN, NFC, FM, the IR technology, and/or the like. The GNSS may include a global satellite positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs, and the one or more GPUs execute program instructions to generate or change display information.

The display 194 is configured to display an image, a video, and the like. In an embodiment, the display 194 may sequentially display a first watch face interface and a second watch face interface described in another embodiment of this application, to present a watch face display animation effect.

The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. The camera 193 is configured to capture a still image or a video. An optical image of an object is generated through a lens and projected to a photosensitive element.

The video codec is configured to compress or decompress a digital video. The electronic device 100 may support one or more video codecs. In this way, the electronic device 100 may play back or record videos in a plurality of encoding formats, for example, moving picture experts group (moving picture experts group, MPEG)-1, MPEG-2, MPEG-3, and MPEG-4.

The internal memory 121 may be configured to store computer-executable program code. The executable program code includes instructions. The internal memory 121 may include a program storage area and a data storage area. The program storage area may store an operating system, an application required by at least one function (for example, a voice playing function and an image playing function), and the like. The data storage area may store data (for example, audio data and a phone book) and the like created during use of the electronic device 100. In addition, the internal memory 121 may include a high-speed random access memory, and may further include a nonvolatile memory, for example, at least one magnetic disk storage device, a flash memory, or a universal flash storage (universal flash storage, UFS). The processor 110 performs various functional applications and data processing of the electronic device 100 by running instructions stored in the internal memory 121 and/or instructions stored in the memory disposed in the processor.

The electronic device 100 may implement an audio function by using the audio module 170, the speaker 170A, the microphone 170C, the application processor, and the like, for example, voice playing.

The pressure sensor is configured to sense a pressure signal and may convert the pressure signal into an electrical signal. In some embodiments, the pressure sensor may be disposed on the display 194. There are many types of pressure sensors, for example, a resistive pressure sensor, an inductive pressure sensor, and a capacitive pressure sensor. When a touch operation is performed on the display 194, the electronic device 100 detects touch pressure of the touch operation by using the pressure sensor. The electronic device 100 may also calculate a touch position of the touch operation based on a detection signal of the pressure sensor. Feasibly, the electronic device 100 may further calculate, based on the calculated touch position, a magnitude of a touch displacement of the touch operation and a direction of the touch position.

The gyroscope sensor may be configured to determine a motion posture of the electronic device 100. The acceleration sensor may detect magnitudes of accelerations of the electronic device 100 in various directions (generally three axes). Feasibly, the electronic device 100 may determine a pose change of the electronic device 100 based on posture data collected by the gyroscope sensor and location data collected by the acceleration sensor, and convert the determined pose change into a viewing angle change of a user with respect to the display 194.

The touch sensor is also referred to as a "touch device". The touch sensor may be disposed on the display 194. The touch sensor and the display 194 form a touchscreen, which is also referred to as a "touch screen". The touch sensor is configured to detect a touch operation performed on or near the touch sensor. The touch sensor may transfer the detected touch operation to the application processor to determine a type of a touch event. A visual output related to the touch operation may be provided by using the display 194. For example, a watch face display animation effect related to the touch operation is displayed. In some other embodiments, the touch sensor may alternatively be disposed on a surface of the electronic device 100, at a position different from that of the display 194.

The button 190 includes a power button, a volume button, and the like. The button 190 may be a mechanical button, or may be a touch button. The motor 191 may generate a vibration prompt. The motor 191 may be configured to provide an incoming call vibration prompt and a touch vibration feedback.

The SIM card interface 195 is configured to connect to a SIM card. The electronic device 100 may support one or N SIM card interfaces, where N is a positive integer greater than 1.

A software system of the electronic device 100 may use a layered architecture, an event-driven architecture, a microkernel architecture, a micro service architecture, or a cloud architecture.

Compared with mobile phones, some electronic devices (such as electronic watches) have relatively small memory and relatively weak computational power; therefore, it is difficult to support display of high-precision dynamic watch faces. For example, due to limitations of device memory and a computational power, an electronic watch in the conventional technology can present a dynamic watch face display effect only by sequentially displaying a plurality of consecutive frames of two-dimensional images.

For example, the plurality of consecutive frames of two-dimensional images may include a close-up image, a medium-shot image, and a long-shot image of an object. The electronic watch sequentially displays the three images, to present a dynamic watch face display effect of the object that seems to move from near to far.

However, if more images are used, memory consumption and computational power consumption of the electronic watch are higher, and the electronic watch cannot support display of a relatively large quantity of images. Therefore, the electronic watch can use only a relatively small quantity of two-dimensional images, and a dynamic watch face display effect is relatively poor.

The following uses an electronic watch as an example to describe technical implementation of embodiments of this application. Embodiments of this application are also applicable to another type of electronic device that has a watch face display function but has relatively small memory and a relatively weak computational power, in addition to an electronic watch.

In an embodiment of this application, a watch face component of the electronic watch includes a dynamic component and a static component.

The dynamic component is a component that needs to generate a complex animation effect and that attracts high user attention in a watch face display process. Therefore, content that needs to generate a complex animation effect and that attracts high user attention in a dynamic watch face may be configured as a dynamic component based on a requirement.

The dynamic component may be represented by using a 3D (three-dimensional) model, for example, a 3D model in a format such as FBX, OBJ, GLB, or VRM. The dynamic component is displayed by using the three-dimensional model, so that a continuous and smooth animation display effect can be achieved.

The static component is a component that does not need to generate an animation effect or generates a simple animation effect and that attracts low user attention in the watch face display process. Therefore, content that does not need to generate an animation effect or generates a simple animation effect and that attracts low user attention in the dynamic watch face may be configured as a static component based on a requirement.

The static component may be represented by using a two-dimensional image, such as an image in a JPG, PNG, or JPEG format. The static component is displayed by using the two-dimensional image, so that memory usage or the like can be reduced.

In a feasible implementation, the electronic watch may store a 3D model used as a dynamic component of the watch face and a two-dimensional image used as a static component of the watch face, and the electronic watch may display the watch face based on the stored 3D model and two-dimensional image.

Compared with the conventional technology, the electronic watch presents a better dynamic watch face display effect by displaying the dynamic component and the static component of the watch face. In addition, a size of the watch face component and an amount of computation can also be reduced, and displaying the watch face based on this can reduce memory consumption and computing resource consumption of the electronic watch.

The following separately describes some embodiments of this application. Mutual reference may be made for implementations and beneficial effects of different embodiments. Although embodiments are separately described, a plurality of embodiments may be simultaneously implemented on a same electronic watch. This is not limited in this application.

For example, dynamic watch face display content of the electronic watch may include a dog swinging in a park (referred to as a scene 1 below), where the sky, ground, trees, grass, stones, and the like are displayed as a background, and the swing and the dog are displayed as a foreground.

In a watch face display process, an animation effect of a background object such as the sky or the ground in the scene 1 may not be reflected, or an animation effect that needs to be reflected is simple. In this case, some or all of the background objects may be displayed as a static component by using one or more two-dimensional images. In other words, when a plurality of objects with simple animation effects are included, the plurality of objects may be displayed by using one two-dimensional image, or the plurality of objects may be separately displayed by using a plurality of two-dimensional images.

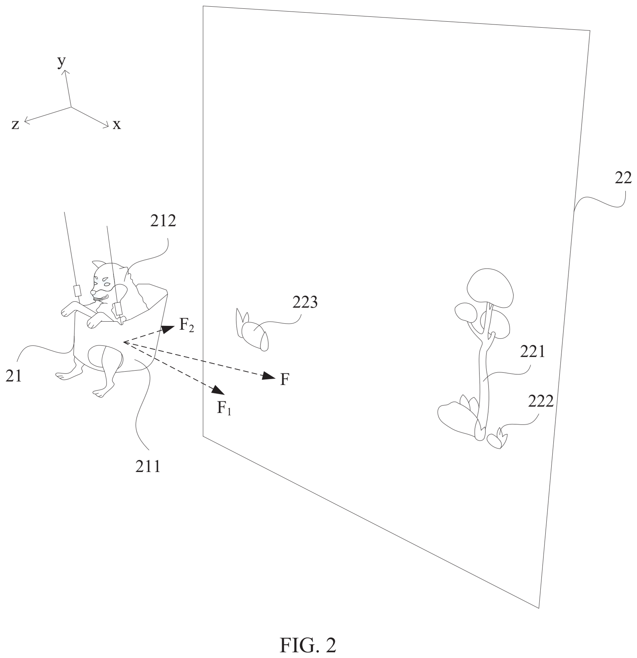

For example, the static component may include a two-dimensional background image 22 shown in FIG. 2, and a plurality of objects such as a tree 221, grass 222, and a stone 223 are displayed by using the two-dimensional background image 22. In this case, the electronic watch may change a display region of the two-dimensional background image 22, to present an animation effect of a position change of an object.

For another example, the static component may include two two-dimensional images, one for displaying trees and grass and stones near the trees, and the other for displaying grass and stones far away from the trees. In this case, the electronic watch may separately change positions of the two two-dimensional images, to present an animation effect of a position change of an object.

In the watch face display process, if the foreground objects such as the swing and the dog in the scene 1 need to reflect a complex animation effect, the foreground objects may be displayed as a dynamic component by using a three-dimensional model. For example, a 3D model 21 shown in FIG. 2 includes a swing 211 and a dog 212. It should be noted that, when a plurality of objects with complex animation effects are included, the plurality of objects may be displayed by using one three-dimensional model, or the plurality of objects may be separately displayed by using a plurality of three-dimensional models.

In other words, with reference to FIG. 2, the watch face component in the scene 1 may include a dynamic component and a static component. The dynamic component includes the 3D model 21 used to display foreground objects such as the swing 211 and the dog 212. The static component includes the two-dimensional background image 22 used to display background objects such as the sky (not shown), the ground (not shown), and the tree 221, the grass 222, and the stone 223 that are located on the rear side of the swing 211. As shown in FIG. 2, the swing 211 may include suspension ropes and a seat, and the dog 212 may sit in the seat.

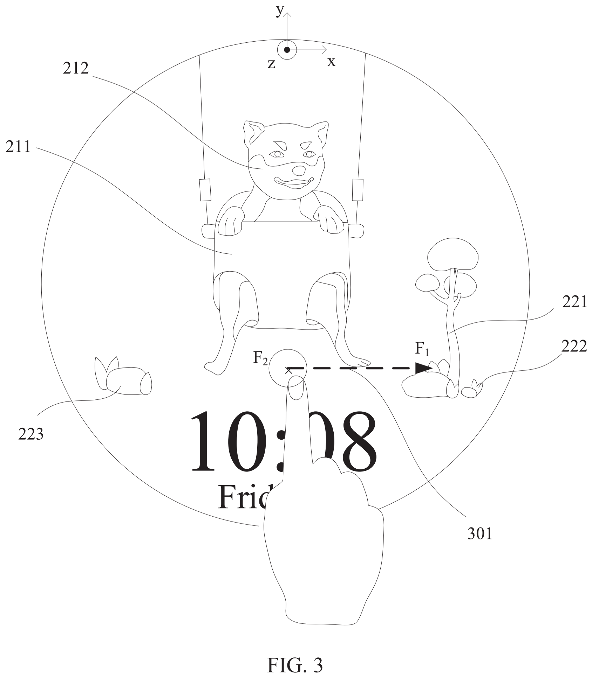

With reference to FIG. 2, an x-axis and a y-axis of a coordinate system may be parallel to the two-dimensional background image 22, and a z-axis of the coordinate system may be perpendicular to the two-dimensional background image 22. With reference to FIG. 3, the x-axis and the y-axis of the coordinate system may be parallel to a surface of a display, the z-axis of the coordinate system is perpendicular to the surface of the display, and a positive half axis of the z-axis points from an inner side of the surface of the display to an outer side of the surface of the display.

A scene of the dog 212 sitting in the swing 211 at rest (or when the swing reaches a lowest position) may be shown in FIG. 2. When the swing 211 is at rest, the suspension ropes of the swing 211 may be perpendicular to the ground. In a process in which the dog 212 sits in the swing 211 and swings from front to back (from the positive half axis of the z-axis to a negative half axis of the z-axis), the dog 212 and the swing 211 may rotate based on the x-axis of the coordinate system, and coordinate values on the x-axis may remain unchanged. In the process of swinging, an uppermost position of the suspension ropes may remain fixed.

A distance between the two-dimensional image and the three-dimensional model may be determined based on a watch face display animation effect.

For example, as shown in FIG. 2, based on a swing range (that is, a farthest position that can be reached when the swing swings forward/backward) of the swing 211 on the z-axis in the animation effect, a swing amplitude (a difference between a z-axis coordinate value when the swing 211 is at rest and a z-axis coordinate value when the swing 211 swings backward to the farthest position) of the swing 211 on the z-axis may be determined. Therefore, a distance between the 3D model 21 and the two-dimensional background image 22 may be determined, to ensure that a distance between the swing 211 and the two-dimensional background image 22 is greater than the swing amplitude when the swing 211 is at rest.

For example, the watch face component shown in FIG. 2 is displayed. A watch face display image when the swing 211 is at rest may be shown in FIG. 3.

It should be noted that, in addition to displaying the swing 211 and the dog 212 in the 3D model 21, and displaying the sky (not shown), the ground (not shown), the tree 221, the grass 222, and the stone 223 in the two-dimensional background image 22, a watch face interface may be further configured to display information such as a time and a date.

It should be noted that the watch face display animation effect may be autonomous, or may be responsive to human-machine interaction. The watch face may be dynamically displayed in response to an operation (or referred to as a user operation) performed by a user on the watch face. The watch face display animation effect may be reflected as a change of a display orientation and display content. The user operation may include a touch operation such as a tap operation or a swipe operation, or may include a viewing angle change operation or the like.

In response to the user operation, a display orientation of the three-dimensional model on the watch face interface may change.

In response to the user operation, a display orientation of the two-dimensional image on the watch face interface may change, or may not change.

In response to the user operation, display content (for example, a display shape or a display color) of the two-dimensional image on the watch face interface may change, or may not change.

An operation parameter of the user operation may be obtained, and the display orientation of the three-dimensional model, the display orientation of the two-dimensional image, and the display content of the two-dimensional image are determined based on the operation parameter.

The operation parameter of the touch operation may include a magnitude and a direction of a touch displacement, touch duration, a touch area, touch pressure, and the like.

An operation parameter of the viewing angle change operation may include a line-of-sight rotation direction, a line-of-sight rotation angle, a line-of-sight distance (that is, a distance between the user and the watch face display), or the like.

A difference in orientations may mean a same direction but different positions, a same position but different directions, or both different directions and different positions. A change of a yaw angle (for example, rotation along a y-axis of an object coordinate system), a pitch angle (for example, rotation along an x-axis of the object coordinate system), or a roll angle (for example, rotation along a z-axis of the object coordinate system) of an object (for example, a three-dimensional model or a two-dimensional image) may cause a change of a direction of the object, and a change of an x-axis coordinate value, a y-axis coordinate value, or a z-axis coordinate value of the object in a specified coordinate value may cause a change of a position of the object.

For example, whether the dog 212 swings with the swing 211 and a swing manner (for example, the swing amplitude and a swing direction) may be determined based on the user operation. Based on an action of the dog 212 swinging with the swing 211, a display orientation of the 3D model 21 on the watch face interface correspondingly changes.

For different types of user operations, watch face display animation effects brought by the user operations are hereinafter described separately.

For example, in response to a swipe operation of the user, the electronic watch may display a dynamic display effect of the dog 212 swinging. In the foregoing scene 1, in response to the swipe operation performed by the user, two watch face interfaces sequentially displayed by the electronic watch are different, which may be reflected at least in different display orientations of the 3D model 21 on the two watch face interfaces.

With reference to FIG. 3, during display of the watch face, if the user performs a swipe operation shown in FIG. 3 (that is, a finger of the user swipes horizontally from a negative half axis of the x-axis to a positive half axis of the x-axis along a path 301 on the touch display), the swipe operation of the user may be converted into a force applied to the dog 212 (or the seat of the swing 211), to change positions of the dog 212 and the swing 211. Therefore, the dynamic display effect of the dog 212 swinging is achieved.

For example, the electronic watch may obtain an operation parameter of the swipe operation, and determine, based on the operation parameter, a magnitude and a direction of a force used to change the orientation of the three-dimensional model.

For example, with reference to FIG. 3, the operation parameter of the swipe operation may include a magnitude of a touch displacement and a direction of the touch displacement of the swipe operation on the x-axis. In this case, the magnitude of the touch displacement may be converted into a magnitude of a force $F_1$ applied to the dog 212, and the direction of the touch displacement may be converted into a direction of the force $F_1$ on the x-axis.

For another example, with reference to FIG. 3, the operation parameter of the swipe operation may include touch pressure of the swipe operation, and the touch pressure may be converted into a magnitude of a force $F_2$ applied to the dog 212.

In a feasible implementation, the display orientation of the three-dimensional model may be determined based on the magnitude and direction of the touch displacement of the swipe operation.

With reference to FIG. 3, if the user performs the swipe operation, in an embodiment of this application, after the user releases the hand to end the swipe operation, the magnitude of the touch displacement (that is, a length of the path 301) and the direction of the touch displacement of the swipe operation in a horizontal direction (an x-axis direction of the coordinate system) may be converted into a horizontal force $F_1$ applied to the dog 212.

After the user ends the swipe operation, the electronic watch may display an animation effect presented by the dog 212 and the swing 211 under a drag action of the horizontal force $F_1$. For example, constrained by the suspension ropes of the swing, the dog 212 and the swing seat swing left and right reciprocally in the x-axis direction by using a current position shown in FIG. 3 as a center, until they come to rest.

In an embodiment of this application, a relationship between a horizontal touch displacement (that is, the touch displacement of the swipe operation in the horizontal direction) and a lateral speed of the swing seat (that is, a left-right swing speed of the dog 212 in the x-axis direction) may meet the following formula (1):

$$Speed\_x = touch\_screen\_time\_x * 0.01 \qquad (1)$$

In the formula, touch_screen_time_x represents the horizontal touch displacement, in units of pixels, and speed_x represents the lateral speed of the swing seat, in units of radians per second.

In a feasible implementation, the display orientation of the three-dimensional model may be determined based on the magnitude and direction of the touch displacement of the swipe operation, and based on touch duration, a touch area, and/or touch pressure of the swipe operation.

With reference to FIG. 3, in addition to converting the touch displacement of the swipe operation into the horizontal force $F_1$, the touch pressure (or the touch area or the touch duration) of the swipe operation may also be converted into a vertical force $F_2$ applied to the dog 212, and a direction of the force $F_2$ is perpendicularly inward (a negative direction of the z-axis of the coordinate system).

After the user ends the swipe operation, the electronic watch may display an animation effect presented by the dog 212 and the swing 211 under a joint action of the horizontal force $F_1$ and the vertical force $F_2$. For example, constrained by the suspension ropes of the swing, the dog 212 and the swing seat swing reciprocally between a left-rear position and a right-front position of the current position (that is, orientation terms such as front, rear, left, and right are used to describe the front side, rear side, left side, and right side of the dog 212) by using the current position shown in FIG. 3 as a center, until they come to rest. If the position of the swing 211 at rest is at an origin of the coordinate system, an x-axis coordinate value of the left-rear position of the current position shown in FIG. 3 is a positive value and a z-axis coordinate value thereof is a negative value, and an x-axis coordinate value of the right-front position of the current position shown in FIG. 3 is a negative value and a z-axis coordinate value thereof is a positive value.

With reference to FIG. 2, the horizontal force $F_1$ and the vertical force $F_2$ may be combined into a force F shown in FIG. 2 (a direction of the force F points to the left-rear side of the current position of the dog 212). In this case, an animation effect presented by applying the horizontal force $F_1$ and the vertical force $F_2$ to the dog 212 may be an animation effect presented by the dog 212 under the force F.

In an embodiment of this application, a relationship between the touch duration and an inward/outward speed of the swing seat (that is, a speed at which the dog 212 swings forward and backward in a z-axis direction) may meet the following formula (2):

$$Speed\_yz = -touch\_screen\_time * 2.0 \qquad (2)$$

In the formula, touch_screen_time represents the touch duration, in units of seconds, and speed_yz represents the inward/outward speed of the swing seat, in units of radians per second.

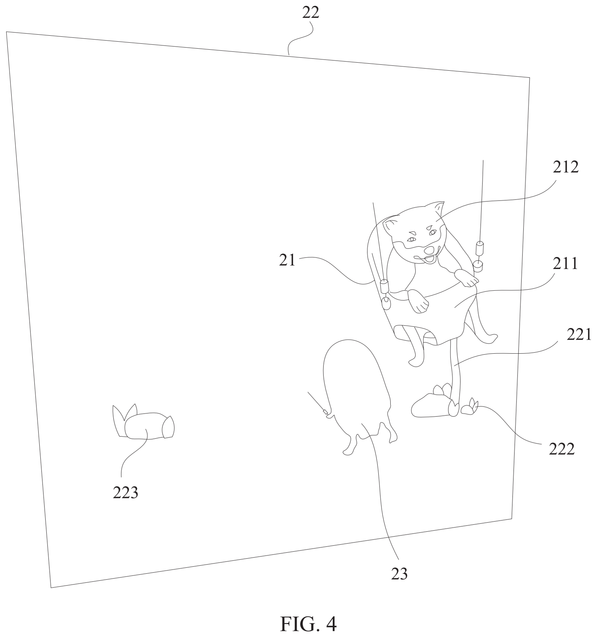

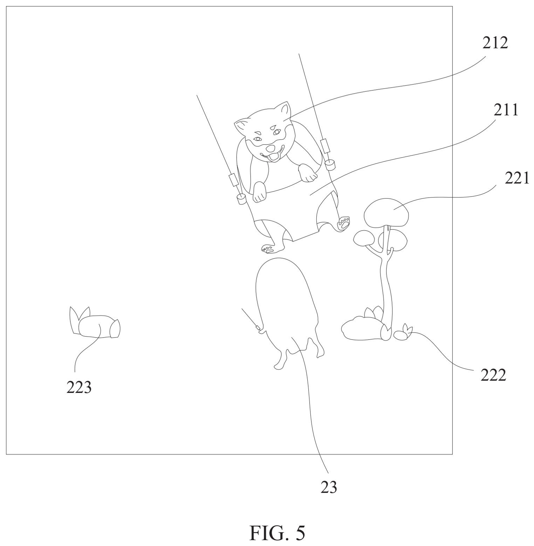

For example, a watch face component when the dog 212 swings to a left-rear position may be shown in FIG. 4, and watch face display content when the dog 212 swings to the left-rear position may be shown in FIG. 5 (watch face information such as the time and date is not shown).

In an embodiment, a watch face display interface of the electronic watch may be a circular interface shown in FIG. 3. In another embodiment, a watch face display interface of the electronic watch may be a square interface shown in FIG. 5.

With reference to FIG. 4 and FIG. 5, when the dog 212 swings to the left-rear position, the dog 212 and the swing 211 tilt toward a left-rear direction, and the dog 212 is in a forward-leaning posture. Compared with the position of the swing 211 at rest as shown in FIG. 2 and FIG. 3, the dog 212 and the swing 211 are closer to the two-dimensional background image 22 in the z-axis direction when the dog 212 swings to the left-rear position.

When the dog 212 swings to a right-front position, the dog 212 and the swing 211 tilt toward a right-front direction, and the dog 212 is in a backward-leaning posture. Compared with the position of the swing 211 at rest as shown in FIG. 2 and FIG. 3, the dog 212 and the swing 211 are farther away from the two-dimensional background image 22 in the z-axis direction when the dog 212 swings to the right-front position.

It can be learned that, in an example in which the dog 212 swings to the left-rear position and the right-front position, when the dog 212 swings to different positions, a display position of the 3D model 21 on the watch face interface changes correspondingly, and when the dog 212 swings to different positions, postures (a left-tilted forward-leaning posture and a right-tilted backward-leaning posture) are different, so that a display direction of the 3D model 21 on the watch face interface changes.

Refer to FIG. 3 and FIG. 5. The two figures respectively show watch face display images when the dog 212 is at rest (or swings to a vertical position) and swings to the left-rear position. It can be learned that, in response to the swipe operation of the user, the position of the dog 212 may change when the dog 212 swings between the left-rear position and the right-front position, so that the watch face display content of the 3D model 21 presents a dynamic display effect of the dog 212 swinging between the left-rear position and the right-front position.

In the scene 1, in response to the swipe operation, two watch face interfaces sequentially displayed by the electronic watch are different. As the dynamic component, the 3D model 21 presents a complex animation effect because display orientations of the dynamic component on the two watch face interfaces are different. However, the static component may have no animation effect or have a simple animation effect.

For example, in response to the swipe operation, the two-dimensional background image 22 as the static component has a same display orientation and display content on the two watch face interfaces that are sequentially displayed by the electronic watch, that is, the background image has no animation effect.

With reference to FIG. 3 and FIG. 5, during the swinging of the dog 212 between the left-rear position and the right-front position, the watch face display content of the two-dimensional background image 22 (including the tree 221, the grass 222, the stone 223, and the like) may remain unchanged.

For another example, in response to the swipe operation, a shadow image of the 3D model 21 as the static component may have different display orientations but same display content on the two watch face interfaces. In other words, the shadow image has an animation effect of a change in the display orientation.

For another example, in response to the swipe operation, a shadow image of the 3D model 21 as the static component may have different display orientations and different display content on the two watch face interfaces. In other words, the shadow image has an animation effect of a change in both the display orientation and the display content.

For example, in response to a tap operation of the user, the electronic watch may display a dynamic display effect of the dog 212 swinging. In the foregoing scene 1, in response to the tap operation performed by the user, two watch face interfaces sequentially displayed by the electronic watch are different, which may be reflected at least in different display orientations of the 3D model 21 on the two watch face interfaces.

The display orientation of the three-dimensional model may be determined based on touch duration, a touch area, and/or touch pressure of the tap operation.

With reference to FIG. 3, if the user performs the tap operation, in an embodiment of this application, after the user releases the hand to end the tap operation, the touch pressure (or the touch area or the touch duration) of the tap operation may be converted into a vertical force $F_2$ applied to the dog 212.

After the user ends the tap operation, the electronic watch may display an animation effect presented by the dog 212 and the swing 211 under a push action of the vertical force $F_2$. For example, constrained by the suspension ropes of the swing, the dog 212 and the swing seat swing forward and backward reciprocally in the z-axis direction by using the current position shown in FIG. 3 as a center, until they come to rest.

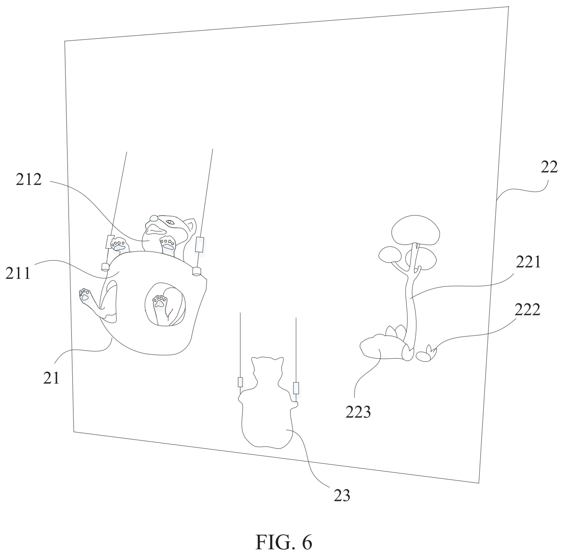

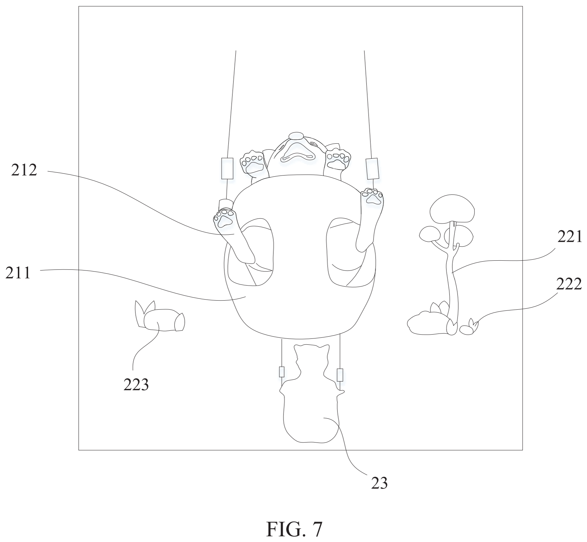

For example, a watch face component when the dog 212 swings to a front position may be shown in FIG. 6, and watch face display content when the dog 212 swings to the front position may be shown in FIG. 7.

With reference to FIG. 6 and FIG. 7, when the dog 212 swings to the front position, the dog 212 and the swing 211 tilt forward, and the dog 212 is in a backward-leaning posture. Compared with the position of the swing 211 at rest as shown in FIG. 2 and FIG. 3, the dog 212 and the swing 211 are farther away from the two-dimensional background image 22 in the z-axis direction when the dog 212 swings to the front position.

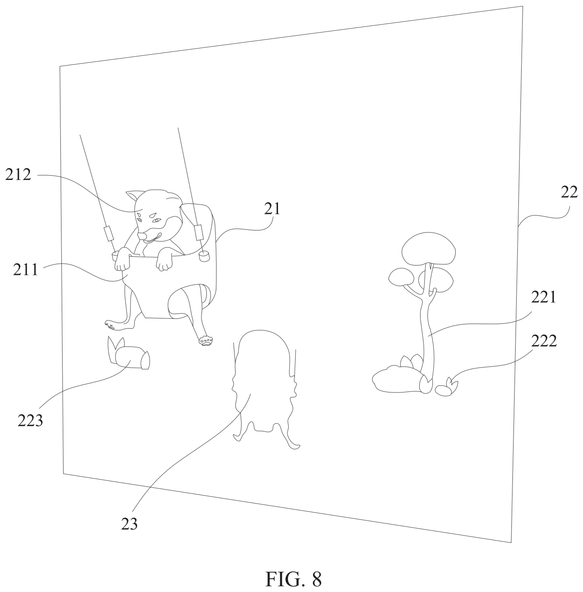

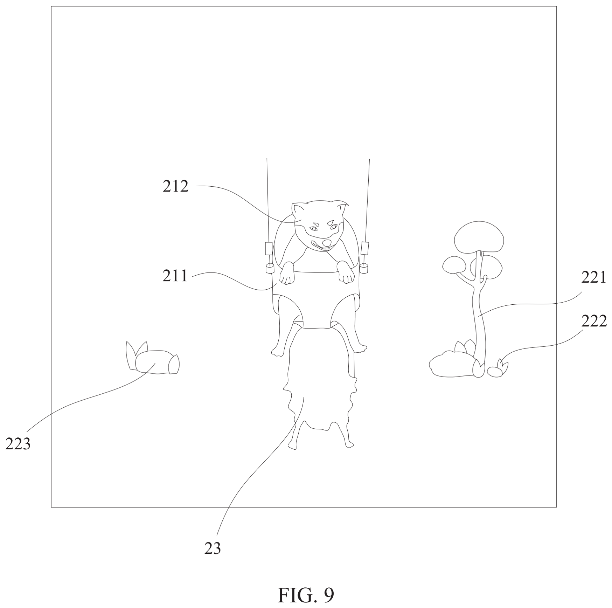

For example, a watch face component when the dog 212 swings to a rear position may be shown in FIG. 8, and watch face display content when the dog 212 swings to the rear position may be shown in FIG. 9.

With reference to FIG. 8 and FIG. 9, when the dog 212 swings to the rear position, the dog 212 and the swing 211 tilt backward, and the dog 212 is in a forward-leaning posture. Compared with the position of the swing 211 at rest as shown in FIG. 2 and FIG. 3, the dog 212 and the swing 211 are closer to the two-dimensional background image 22 in the z-axis direction when the dog 212 swings to the rear position.

It can be learned that, in an example in which the dog 212 swings to the rear position and the front position, when the dog 212 swings to different positions, a display position of the 3D model 21 on the watch face interface changes correspondingly, and when the dog 212 swings to different positions, postures (the forward-leaning posture and the backward-leaning posture) are different, so that a display direction of the 3D model 21 on the watch face interface changes.

Refer to FIG. 3, FIG. 7, and FIG. 9. The three figures respectively show watch face display images when the dog 212 is at rest (or swings to the vertical position), swings to the front position, and swings to the rear position. It can be learned that, in response to the tap operation of the user, the position of the dog 212 may change when the dog 212 swings forward and backward, so that the watch face display content of the 3D model 21 presents a dynamic display effect of the dog 212 swinging forward and backward.

In the scene 1, in response to the tap operation, two watch face interfaces sequentially displayed by the electronic watch are different. As the dynamic component, the 3D model 21 presents a complex animation effect because display orientations of the dynamic component on the two watch face interfaces are different. However, the static component may have no animation effect or have a simple animation effect.

For example, in response to the tap operation, the two-dimensional background image 22 as the static component has a same display orientation and display content on the two watch face interfaces that are sequentially displayed by the electronic watch, that is, the background image has no animation effect.

With reference to FIG. 3, FIG. 7, and FIG. 9, during the forward and backward swinging of the dog 212, the watch face display content of the two-dimensional background image 22 (including the tree 221, the grass 222, the stone 223, and the like) may remain unchanged.

For another example, in response to the tap operation, a shadow image of the 3D model 21 as the static component may have different display orientations but same display content on the two watch face interfaces. In other words, the shadow image has an animation effect of a change in the display orientation.

For another example, in response to the tap operation, a shadow image of the 3D model 21 as the static component may have different display orientations and different display content on the two watch face interfaces. In other words, the shadow image has an animation effect of a change in both the display orientation and the display content.

In a feasible implementation, the touchscreen of the electronic watch may be a pressure-sensitive screen. When the user performs a touch operation such as a tap operation or a swipe operation, the electronic watch may measure, in real time by using the pressure-sensitive screen, touch pressure of the user during the touch operation, and then convert the measured touch pressure into a vertical force $F_2$.

In an embodiment, greater touch pressure indicates a larger value of the vertical force $F_2$ obtained through conversion.

In another feasible implementation, when the user performs a touch operation such as a tap operation or a swipe operation, the electronic watch may measure, in real time by using the touchscreen, a touch area of the user during the touch operation, and then may convert the measured touch area into touch pressure, and then convert the touch pressure into a vertical force $F_2$, or directly convert the measured touch area into a vertical force $F_2$.

In an embodiment, a larger touch area indicates greater touch pressure obtained through conversion.

In an embodiment, a larger touch area indicates a larger value of the vertical force $F_2$ obtained through conversion.

In still another feasible implementation, when the user performs a touch operation such as a tap operation or a swipe operation, the electronic watch may measure, by using the touchscreen, touch duration (that is, duration of the touch operation) of the user, and then may convert the measured touch duration into touch pressure, and then convert the touch pressure into a vertical force $F_2$, or directly convert the measured touch duration into a vertical force $F_2$.

In an embodiment, longer touch duration indicates greater touch pressure obtained through conversion.

In an embodiment, shorter touch duration indicates a larger value of the vertical force $F_2$ obtained through conversion.

In addition to the foregoing description where after the user ends the touch operation, the touch displacement and the touch pressure (or the touch area or the touch duration) of the touch operation may be converted into a force applied to the dog 212, in another feasible implementation, in a process of performing the touch operation by the user, the current touch position and the touch pressure (or the touch area or the touch duration) of the touch operation may be converted in real time into a current force applied to the dog 212. In this way, in the process in which the user performs the touch operation, the electronic watch may display in real time an animation effect presented by the dog 212 and the swing 211 under the current force.

In a feasible implementation, with reference to FIG. 3, in a process in which the user performs the swipe operation, constrained by the suspension ropes of the swing, the dog 212 and the swing seat swing leftward gradually by using the current position as a center, and after the user ends the swipe operation, swing left and right reciprocally in the x-axis direction by using the current position as a center until they come to rest.

In another feasible implementation, with reference to FIG. 3, in a process in which the user performs the swipe operation, constrained by the suspension ropes of the swing, the dog 212 and the swing seat swing toward the left-rear side gradually by using the current position as a center, and after the user ends the swipe operation, swing reciprocally between the left-rear position and the right-front position of the current position by using the current position as a center until they come to rest.

In still another feasible implementation, with reference to FIG. 3, in a process in which the user performs the tap operation, constrained by the suspension ropes of the swing, the dog 212 and the swing seat swing backward gradually by using the current position as a center, and after the user ends the tap operation, swing forward and backward reciprocally in the z-axis direction by using the current position as a center until they come to rest.

In addition to the foreground objects such as the swing and the dog, and the background objects such as the tree, the stone, and grass, dynamic watch face display content in the foregoing scene 1 may further include shadows of the dog and the swing, and the shadows of the dog and the swing change correspondingly with the change of the positions of the respective objects. In this case, in response to a user operation, a display orientation of a shadow on the watch face interface may change.

In a watch face display process, if a shadow in the scene 1 needs to reflect a simple animation effect, the shadow may be used as a static component and displayed as a two-dimensional shadow image.

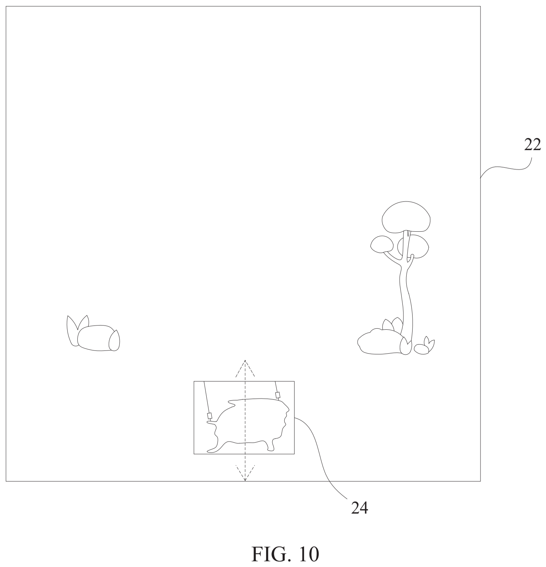

In an embodiment, with reference to FIG. 10 to FIG. 12, the static component in the watch face component in the scene 1 may not only include the two-dimensional background image 22, but also include a shadow image 24. A ground shadow image of the 3D model 21 may be reflected by using image content of the shadow image 24, and a ground shadow position of the 3D model 21 may be reflected by using a position of the shadow image 24. FIG. 10 to FIG. 12 respectively show watch face display content (the 3D model 21 is not shown) when the dog 212 swings to the lowest position, swings backward, and swings forward.

In a feasible implementation, as an orientation of an object changes, a display orientation of a shadow thereof changes correspondingly, but display content of the shadow remains unchanged. For example, a dynamic change of the shadow may be reflected by changing a display orientation of the shadow image 24, without changing display content of the shadow image 24.

In an embodiment, a position movement of the shadow image in the x-axis direction and a position movement of the shadow image in a y-axis direction may be a movement of the shadow image on the background image along the x-axis and a movement of the shadow image on the background image along the y-axis respectively, and a distance between the shadow image and the background image in the z-axis direction may be zero.

The display orientation of the shadow image changes correspondingly with the orientation of the object, but the display content of the shadow image remains unchanged. In this way, a display requirement for displaying a simple animation effect on the shadow image that the user does not pay much attention to can be met, and consumption of memory and computing resources of the electronic watch by watch face display can be reduced.

With reference to FIG. 10 to FIG. 12, because coordinate values of the dog 212 and the swing 211 in the x-axis direction do not change while the dog 212 transitions from swinging backward to swinging to the lowest position and then transitions to swinging forward and backward along the z-axis direction, during the forward and backward swinging of the dog 212, a position change of the shadow image 24 involves only an up-down movement change in the y-axis direction (a movement path shown by a dashed line in FIG. 10 to FIG. 12), and does not involve a left-right movement change in the x-axis direction.

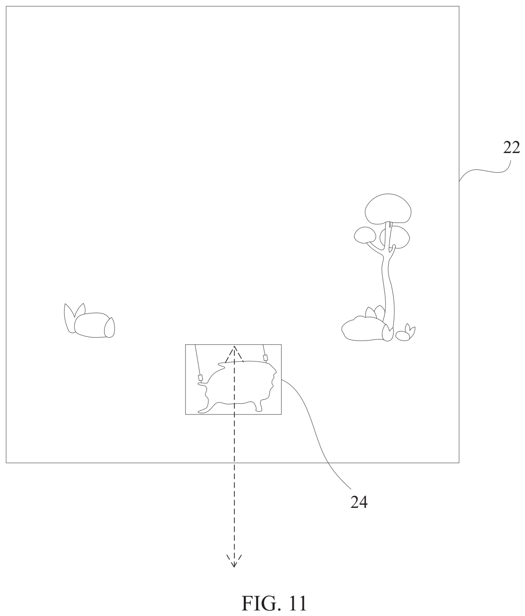

For example, compared with a position (denoted as a position 1) of the shadow image 24 when the dog 212 swings to the lowest position shown in FIG. 10, because the dog 212 is closer to the two-dimensional background image 22 when the dog 212 swings backward, a position of the shadow image 24 when the dog 212 swings backward is above the position 1 in the y-axis direction (as shown in FIG. 11).

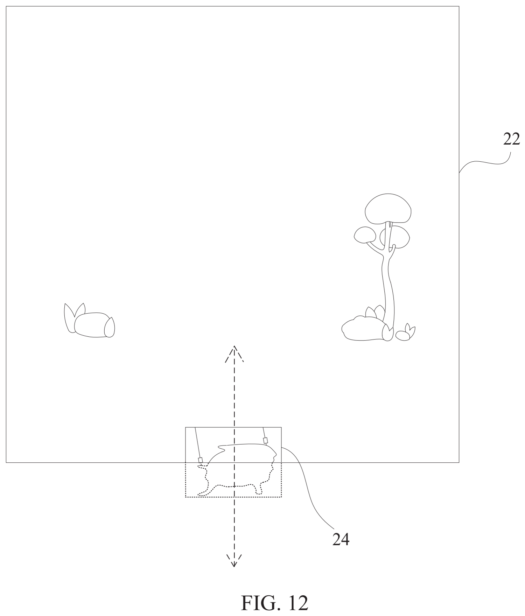

For another example, compared with the position 1 of the shadow image 24 when the dog 212 swings to the lowest position shown in FIG. 10, because the dog 212 is farther away from the two-dimensional background image 22 when the dog 212 swings forward, a position of the shadow image 24 when the dog 212 swings forward is below the position 1 in the y-axis direction (as shown in FIG. 12).

In addition, when the dog 212 swings forward, there may be a case in which the shadow image 24 exceeds or partially exceeds a boundary of the two-dimensional background image 22 in the y-axis direction (content shown by a dotted line in FIG. 11 is an exceeding part). In this case, the exceeding part may not be displayed.

In an embodiment of this application, a relationship between a shadow displacement (that is, a displacement of the shadow image in the y-axis direction) and a rotation angle of the swing (that is, the rotation angle of the swing along the x-axis) may meet the following formula (3):

$$h = H * \sin(\theta) * 0.25 \qquad\qquad (3)$$

In the formula, h represents the shadow displacement, H represents a height of the shadow image (that is, the length of the shadow image in the y-axis direction), and $\theta$ represents the rotation angle of the swing.

The swinging process of the dog 212 may include not only swinging forward and backward along the z-axis direction, but also swinging left and right along the x-axis direction. Therefore, corresponding to a position change of the dog 212 swinging forward and backward, the shadow image 24 may move up and down in the y-axis direction, and corresponding to a position change of the dog 212 swinging left and right or forward and backward, the shadow image 24 may move left and right in the x-axis direction.

For example, compared with the position 1 of the shadow image 24 when the dog 212 swings to the lowest position shown in FIG. 10, when the dog 212 swings to the left-rear side, an x-axis coordinate value of the position of the shadow image 24 may be greater than an x-axis coordinate value of the position 1, and a y-axis coordinate value of the position of the shadow image 24 may be greater than a y-axis coordinate value of the position 1.

For another example, compared with the position 1 of the shadow image 24 when the dog 212 swings to the lowest position shown in FIG. 10, when the dog 212 swings to the right-front side, an x-axis coordinate value of the position of the shadow image 24 may be less than an x-axis coordinate value of the position 1, and a y-axis coordinate value of the position of the shadow image 24 may be less than a y-axis coordinate value of the position 1.

As shown in FIG. 10 to FIG. 12, during the forward and backward swinging of the dog 212, a display position of the shadow image 24 correspondingly changes along the y-axis direction, but display content of the shadow image 24 may remain consistent.

In another feasible implementation, as an orientation of an object changes, both a display orientation and display content of a shadow thereof change correspondingly. The display orientation and the display content of the shadow change correspondingly with the orientation of the object, so that the electronic watch can display the shadow more realistically, and that a visual effect of watch face display can be improved.

In an embodiment, the static component may include a plurality of shadow images, and the plurality of shadow images are in a one-to-one correspondence with a plurality of orientations of the 3D model 21. For example, when the dog 212 is located at the left-rear position shown in FIG. 4, a corresponding shadow image is a shadow image 23 shown in FIG. 4. For another example, when the dog 212 is located at the front position shown in FIG. 6, a corresponding shadow image is a shadow image 23 shown in FIG. 6.

In another embodiment, in addition to the dog 212 and the swing 211, the 3D model 21 may further include shadows of the dog 212 and the swing 211. In this case, shadow images 23 shown in FIG. 4 to FIG. 9 may be shadows in the 3D model 21.

As shown in FIG. 4 and FIG. 5, when the dog 212 swings to the left-rear position, the dog 212 and the swing 211 tilt toward the left-rear direction, and the dog 212 is in a forward-leaning posture. In this case, the shadows of the dog 212 and the swing 211 tilt in a positive half-axis direction of the x-axis based on the y-axis, and the shadow image 23 reflects a shadow image when the dog 212 is in the forward-leaning posture and tilts in the left-rear direction.

As shown in FIG. 6 and FIG. 7, when the dog 212 swings to the front position, the dog 212 and the swing 211 tilt forward, and the dog 212 is in a backward-leaning posture. In this case, the shadows of the dog 212 and the swing 211 do not tilt based on the y-axis, and the shadow image 23 reflects a shadow image when the dog 212 is in the backward-leaning posture and tilts forward.

As shown in FIG. 8 and FIG. 9, when the dog 212 swings to the rear position, the dog 212 and the swing 211 tilt backward, and the dog 212 is in a forward-leaning posture. In this case, the shadows of the dog 212 and the swing 211 do not tilt based on the y-axis, and the shadow image 23 reflects a shadow image when the dog 212 is in the forward-leaning posture and tilts backward.

As shown in FIG. 4 to FIG. 9, when the dog 212 swings to different positions, display orientations of the shadow image 23 are different, so that an effect of dynamically changing the shadow display orientation can be presented. For example, compared with the coordinate value of the shadow in the y-axis direction when the dog 212 swings to the front position, the coordinate value of the shadow in the y-axis direction when the dog 212 swings to the rear or left-rear position is greater.

As shown in FIG. 4 to FIG. 9, when the dog 212 swings to different positions, display content of the shadow image 23 is different, so that an effect of dynamically changing the shadow display content can be presented.

For example, the electronic watch may display a dynamic display effect of the three-dimensional model and a dynamic display effect of the two-dimensional image in response to the viewing angle change operation of the user. In the foregoing scene 1, in response to the viewing angle change operation performed by the user, two watch face interfaces sequentially displayed by the electronic watch are different, which may be reflected in different display orientations of the 3D model 21, the two-dimensional background image 22, and the background image on the two watch face interfaces.

The display orientation of the three-dimensional model and the display orientation of the two-dimensional image may be determined based on the operation parameter such as the line-of-sight rotation direction, the line-of-sight rotation angle, or the line-of-sight distance of the viewing angle change operation.

Self-rotation of the three-dimensional model in a corresponding direction and angle may be controlled based on the line-of-sight rotation direction and line-of-sight rotation angle of the viewing angle change operation, to change a display direction of the three-dimensional model; and a z-axis coordinate value of the three-dimensional model may be changed based on the line-of-sight distance of the viewing angle change operation, to change a display position of the three-dimensional model.

Based on the line-of-sight rotation direction and line-of-sight rotation angle, translation of the position of the two-dimensional image in the x-axis direction and the y-axis direction may be controlled, or self-rotation of the two-dimensional image may be controlled, and a z-axis coordinate value of the two-dimensional image may be changed based on the line-of-sight distance, so that the display orientation of the two-dimensional image changes.

In response to the viewing angle change operation, the change of the display orientation of the two-dimensional image may include a change of a display region and a display position of the two-dimensional image.

During display of the watch face, a viewing angle of the user for viewing the watch face display content may change. In this case, the display orientations of the three-dimensional model and the two-dimensional image are changed, so that the watch face display content can change correspondingly to match the viewing angle change of the user. The watch face display content is changed in response to the viewing angle change of the user, so that the watch face display content can match the viewing angle of the user, and that a watch face display effect is better.

In an embodiment, a sensor such as an acceleration sensor or a gyroscope sensor may be installed in the electronic watch, and a tilt status of the display may be detected based on data collected by the sensor in real time. For example, whether the display tilts and a tilt direction and amplitude are detected.

Feasibly, the tilt direction and amplitude of the display may be converted into the line-of-sight rotation direction and the line-of-sight rotation angle of the viewing angle change operation, that is, the tilt of the display is used to reflect the viewing angle change of the user. For example, when the display does not tilt, it may be considered that the viewing angle of the user is a front view, but when the display tilts, it may be considered that the viewing angle of the user is an oblique view. For another example, when the display tilts toward a direction, it may be considered that the viewing angle of the user is a viewing angle tilting toward an opposite direction.

The display region of the two-dimensional image may be changed based on the operation parameter of the viewing angle change operation, to achieve a display effect of the dynamically changing display orientation of the two-dimensional image on the watch face display interface before and after the viewing angle change.

The two-dimensional image includes a background image, and x-axis and y-axis coordinate values of the background image may be changed based on the line-of-sight rotation direction and the line-of-sight rotation angle, so that a display region of the background image is changed.

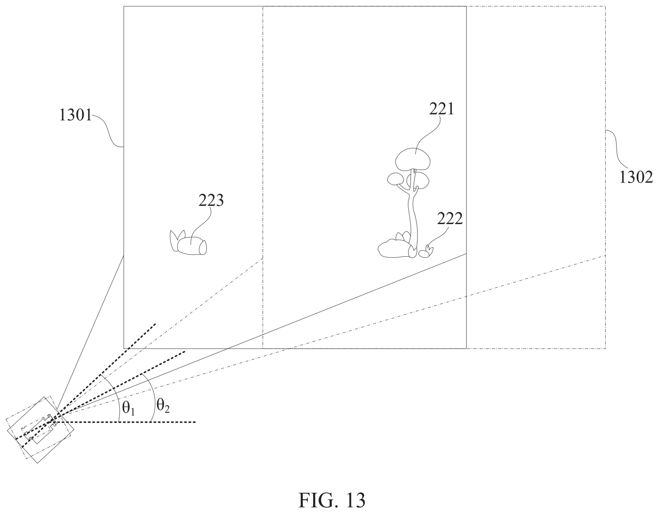

For example, with reference to FIG. 13, in the foregoing scene 1, when the viewing angle of the user is 01, the display image of the electronic watch may be an image shown by a reference numeral 1301 (that is, the two-dimensional background image 22 is displayed). When the viewing angle of the user is 02, the display image of the electronic watch may be an image shown by a reference numeral 1302.

As shown in FIG. 13, when the viewing angle of the user is $\theta1$, the watch face display content includes the tree 221, all the grass 222, and the entire stone 223 in the two-dimensional background image 22, the tree 221 and the grass 222 near the tree 221 are located on one side of the image, and the stone 223 far away from the tree 221 is located on the other side of the image.

When the viewing angle of the user is 02, the watch face display content includes the tree 221, a part of the grass 222, and a part of the stone 223 in the two-dimensional background image 22, another part of the grass 222 and another part of the stone 223 are not displayed, and the tree 221 and the grass 222 near the tree 221 are located in the middle rather than one side of the image.

To be specific, when the viewing angle of the user is $\theta1$, the display region of the two-dimensional background image 22 is a region in which the image shown by the reference numeral 1301 is located. When the viewing angle of the user is $\theta2$, the display region of the two-dimensional background image 22 is a region in which an intersection part of the image shown by the reference numeral 1301 and the image shown by the reference numeral 1302 is located. In this way, the display region of the two-dimensional background image 22 changes based on a change of the viewing angle of the user.

In an embodiment, in a process in which the viewing angle of the user gradually changes from $\theta1$ to 02, the display image of the electronic watch may gradually change from the image shown by the reference numeral 1301 to the image shown by the reference numeral 1302.

With reference to FIG. 13, a display image of the background image at any viewing angle may be a part of the image of the background image at the viewing angle. In this way, when the viewing angle of the user changes, the part of the image of the background image at the viewing angle before the change may be first displayed through translation, and then a part of the image of the background image at the viewing angle after the change is displayed through translation.

A direction of the translation may be consistent with a direction of the viewing angle change. For example, if the viewing angle of the user changes in a direction of the positive half axis of the x-axis, the background image is translated in the direction of the positive half axis of the x-axis for display.

In an embodiment of this application, when the viewing angle of the user changes, the electronic watch may dynamically display the static component through translation and edge pixel extension when the viewing angle changes.

If a display image of the background image at a specific viewing angle may be the entire image of the background image, a display image of the background image at another viewing angle may include a part of the image of the background image at the viewing angle and an image obtained by extending edge pixels.

With reference to FIG. 13, if the viewing angle of the user is $\theta1$, an image displayed by the electronic watch for the two-dimensional background image 22 may be the entire image (that is, the image shown by the reference numeral 1301) of the two-dimensional background image 22. If the viewing angle of the user is 02, an image displayed by the electronic watch for the two-dimensional background image 22 may include the part of the image (that is, the intersection part of the image shown by the reference numeral 1302 and the image shown by the reference numeral 1301) of the two-dimensional background image 22 at the viewing angle $\theta2$ and the image obtained by extending edge pixels (that is, a remaining part of the image excluding the intersection part of the image shown by the reference numeral 1302).

Translation along a positive x-axis direction to display the image shown by the reference numeral 1302 as shown in FIG. 13 is used as an example. Pixels may be extended to the right based on pixels at a right edge of the two-dimensional background image 22, and the extended pixels may be consistent with the pixels at the right edge of the two-dimensional background image 22.

In an embodiment of this application, when the viewing angle of the user changes, the electronic watch may further dynamically display the static component by switching the background image when the viewing angle changes.

It can be learned that the viewing angle change operation may cause dynamic display of the background image. When the viewing angle changes, the background image may be dynamically displayed through translation, edge pixel extension, and background image switching, so that the display image of the background image changes with the viewing angle change of the user. In this way, a continuous and smooth watch face display effect can be presented when the viewing angle of the user changes.

The display orientation of the three-dimensional model may be changed based on the operation parameter of the viewing angle change operation.

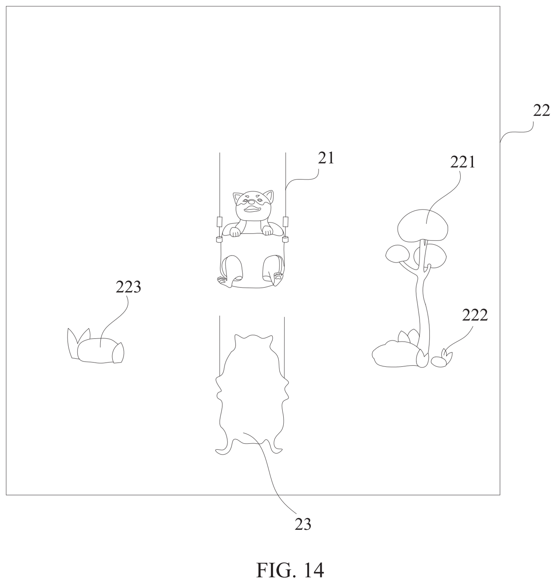

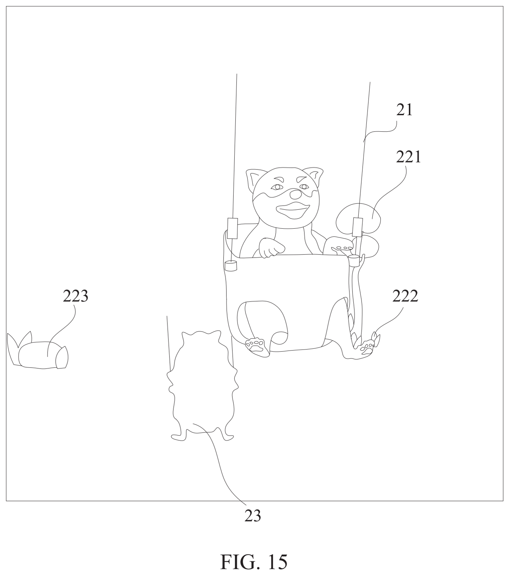

For example, in the foregoing scene 1, when the viewing angle of the user is a front view of the watch face, the watch face display content of the electronic watch may be shown in FIG. 14. When the viewing angle of the user is an oblique view of the watch face, the watch face display content of the electronic watch may be shown in FIG. 15. The display orientation of the 3D model 21 dynamically changes with the viewing angle change of the user.

As shown in FIG. 14, when the user views the watch face from the front, the electronic watch may display a front image of the 3D model 21 that is visible in a front view. As shown in FIG. 15, when the user views the watch face obliquely, the electronic watch may display a side image of the 3D model 21 that is visible in an oblique view. Compared with the front image of the 3D model 21 shown in FIG. 14, the side image of the 3D model 21 shown in FIG. 15 may be an image that can be seen by the user by rotating the 3D model 21 when the viewing angle of the user remains unchanged.

An image of the dynamic component after rotation may be displayed to match the viewing angle change of the user. When changing the viewing angle, the user may see that the display orientation of the dynamic component on the watch face rotates by a corresponding angle. In this way, user experience can be improved.

The display orientation of the two-dimensional image may be changed based on the operation parameter of the viewing angle change operation, to achieve a display effect of the dynamically changing display orientation of the two-dimensional image on the watch face display interface before and after the viewing angle change.

The two-dimensional image includes a shadow image, and x-axis and y-axis coordinate values of the shadow image may be changed based on the line-of-sight rotation direction and the line-of-sight rotation angle, so that a display position of the shadow image is changed.

When the viewing angle of the user changes, the electronic watch may control the position of the static component in the coordinate system to undergo a translational change, so that the display orientation of the static component on the watch face changes. If the static component includes a background image and a shadow image, the background image and the shadow image may undergo a translational change synchronously.

With reference to FIG. 14 and FIG. 15, when the viewing angle of the user changes from a front view to an oblique view, display content of the two-dimensional background image 22 and the shadow image 23 on the electronic watch is subject to a translational change, so that a relative position relationship between the background objects (the tree 221, the grass 222, and the stone 223) in the shadow image 23 and the two-dimensional background image 22 remains consistent. In this way, when the viewing angle of the user changes from the front view to the oblique view, the display region of the two-dimensional background image 22 dynamically changes, and the display position of the shadow image 23 dynamically changes.

An embodiment of this application provides a watch face display method. The method may include the following step (1) to step (3).

Step (1): Obtain a watch face component, where the watch face component includes a three-dimensional model and a two-dimensional image.

The three-dimensional model is a dynamic component of a watch face, and is used to generate a complex animation effect. Feasibly, the dynamic component of the watch face component may include one or more three-dimensional models.

In an embodiment, the three-dimensional model is used to display a foreground object. For example, the three-dimensional model included in the watch face component may be the 3D model 21 shown in FIG. 2.

The two-dimensional image is a static component of the watch face, and may not generate an animation effect or may be used to generate a simple animation effect. Feasibly, the static component of the watch face component may include one or more two-dimensional images.

In a feasible implementation, the static component of the watch face component may include a foreground image, a background image, and an image whose component position is between the foreground image and the background image.

The foreground image may be located in front of another component of the watch face, and may block another component located behind the foreground image.

The background image may be located behind another component of the watch face, and may be blocked by another component located in front of the background image. As shown in FIG. 2 and FIG. 3, the 3D model 21 is located in front of the two-dimensional background image 22, and may block some image content of the two-dimensional background image 22.

In a feasible implementation, the background image includes images of all elements used as a watch face display background.

In an embodiment, the two-dimensional image includes an image used to display a background object. For example, the two-dimensional image included in the watch face component may be the two-dimensional background image 22 shown in FIG. 2.

Step (2): Display a first watch face interface based on the three-dimensional model and the two-dimensional image.

In an embodiment, the first watch face interface may be shown in FIG. 3.

Step (3): Display a second watch face interface based on the three-dimensional model and the two-dimensional image in response to a first operation performed by a user on the watch face. A display orientation of the three-dimensional model on the first watch face interface is different from a display orientation of the three-dimensional model on the second watch face interface.

In response to the first operation, the display orientation of the three-dimensional model on the watch face display interface dynamically changes. A difference in orientations may mean a same direction but different positions, a same position but different directions, or both different directions and different positions.

The first operation may be a touch operation, or may be a viewing angle change operation of the user.

The touch operation may be a swipe operation, a tap operation, or the like performed by the user on a watch face display during watch face display. In response to the touch operation, display orientations of the three-dimensional model on the watch face display interface are different.

For example, with reference to FIG. 5, in response to the swipe operation of the user, a display image of the 3D model 21 may be the dog 212 swinging to the left-rear side. Before this, a display image of the 3D model 21 may be an image of the dog 212 at rest, that is, there is a three-dimensional animation effect from rest to swinging to the left-rear side.

For another example, with reference to FIG. 9, in response to the tap operation of the user, a display image of the 3D model 21 may be the dog 212 swinging backward. Before this, a display image of the 3D model 21 may be an image of the dog 212 at rest, that is, there is a three-dimensional animation effect from rest to swinging backward.

The viewing angle change operation may be a viewing angle change operation (for example, a head movement) performed by the user during watch face display, an operation that causes a viewing angle change of the user (for example, a wrist movement at a position where the user wears an electronic watch), or the like. In response to the viewing angle change operation, display orientations of the three-dimensional model on the watch face display interface are different.

For example, the display image of the first watch face interface may be an image shown in FIG. 14, and in response to the viewing angle change operation, the display image of the second watch face interface may be an image shown in FIG. 15, and the display orientation of the 3D model 21 on the watch face display interface changes.

In an embodiment, the viewing angle change of the user may be detected by detecting a tilt status of the watch face display. In another embodiment, the viewing angle change of the user may alternatively be detected by using a face image captured by a built-in camera.

In this embodiment of this application, the three-dimensional model is a dynamic component of the watch face, and may generate a complex animation effect; and the two-dimensional image is a static component of the watch face, and may not generate an animation effect or may generate a simple animation effect. The electronic watch may present a dynamic watch face display effect by displaying the dynamic component and the static component of the watch face. In addition, in this embodiment of this application, a size of the watch face component and an amount of computation can also be reduced, and displaying the watch face based on this can reduce memory consumption and computing resource consumption of the electronic watch. Therefore, this embodiment of this application supports display of a high-precision dynamic watch face on an electronic device that has relatively small memory and a relatively weak computational power.

In an embodiment, step (3) may include: obtaining an operation parameter of the first operation; and determining the display orientation of the three-dimensional model based on the operation parameter, that is, determining the display orientation of the three-dimensional model on the second watch face display interface, to change the display orientation of the three-dimensional model.

If the first operation is detected, the operation parameter of the first operation may be obtained, and the display orientation of the three-dimensional model is changed based on the obtained operation parameter, so that the second watch face interface is displayed based on the changed display orientation. In this way, the display orientation of the three-dimensional model on the watch face interface is changed, to present an animation effect of the three-dimensional model. In an embodiment, an operation parameter of the touch operation includes one or more of the following: a displacement magnitude of a touch displacement of the touch operation; a displacement direction of the touch displacement of the touch operation; touch duration of the touch operation; a touch area of the touch operation; and touch pressure of the touch operation. These operation parameters may be used to determine a display position and/or a display direction of the three-dimensional model.

In an embodiment, the step of determining the display orientation of the three-dimensional model based on the operation parameter may include: determining an x-axis coordinate value and a y-axis coordinate value of the three-dimensional model in a specified coordinate system based on the displacement magnitude and the displacement direction; and determining a z-axis coordinate value of the three-dimensional model in the specified coordinate system based on at least one of the touch duration, the touch area, and the touch pressure, where a z-axis of the specified coordinate system is perpendicular to the display of the watch face.

With reference to FIG. 2 and FIG. 3, a magnitude and a direction of a horizontal force $F_1$ may be determined based on the displacement magnitude and the displacement direction; the touch duration, the touch area, and the touch pressure may be used to determine a magnitude of a vertical force $F_2$; and a display position of the 3D model 21 may be determined based on the two forces.

The touch displacement of the touch operation is converted into a position on an xy plane, and the touch pressure or the like is converted into a z-axis coordinate value, so that the touch operation can be converted into a display position of the three-dimensional model. Based on a change of the display position, a three-dimensional animation effect of the three-dimensional model may be presented.

In an embodiment, a display direction of the three-dimensional model may be determined based on a spatial position of the three-dimensional model. For example, in the foregoing scene 1, after the spatial position of the 3D model 21 is determined, the display direction of the 3D model 21 may be determined based on a pull effect of the suspension ropes of the swing. For example, in the embodiment shown in FIG. 4, the display direction of the 3D model 21 is that the 3D model 21 tilts toward the left-rear side.

In another embodiment, a direction of the three-dimensional model may remain fixed. For example, the three-dimensional model always remains upright.

In an embodiment, an operation parameter of the viewing angle change operation includes one or more of the following: a line-of-sight rotation direction of the viewing angle change operation; a line-of-sight rotation angle of the viewing angle change operation; and a line-of-sight distance of the viewing angle change operation.

In an embodiment, the step of determining the display orientation of the three-dimensional model based on the operation parameter may include: determining a rotation direction of the three-dimensional model in a specified coordinate system based on the line-of-sight rotation direction; determining a rotation angle of the three-dimensional model in the specified coordinate system based on the line-of-sight rotation angle; and determining a z-axis coordinate value of the three-dimensional model in the specified coordinate system based on the line-of-sight distance, where a z-axis of the specified coordinate system is perpendicular to the display of the watch face.

The display orientation of the three-dimensional model may be changed based on the operation parameter of the viewing angle change operation, and the change of the display orientation may involve a rotation change of the three-dimensional model and a change of a z-axis coordinate value to match a viewing angle change of the user.

For example, with reference to FIG. 14 and FIG. 15, when the viewing angle of the user changes from a front view to an oblique view, the three-dimensional model rotates by a corresponding angle, so that the display orientation of the three-dimensional model changes.

In addition to the change of the display orientation of the three-dimensional model, the user operation may further cause a change of a display orientation of the two-dimensional image. Therefore, in an embodiment, a display orientation of the two-dimensional image on the first watch face interface is different from a display orientation of the two-dimensional image on the second watch face interface.

With reference to FIG. 5, FIG. 7, and FIG. 9, in response to the touch operation, the display orientation of the background image on the watch face display interface remains unchanged, but the display orientation of the shadow image on the watch face display interface changes. In another embodiment, in response to the touch operation, the display orientation of the background image on the watch face display interface may also change. This is not limited in this application.

With reference to FIG. 14 and FIG. 15, in response to the viewing angle change operation, the display orientation of the background image on the watch face display interface changes, and the display orientation of the shadow image on the watch face display interface changes.

In addition to the change of the display orientation of the two-dimensional image, the user operation may further cause a change of display content (for example, a display shape or a display color) of the two-dimensional image. Therefore, in an embodiment, display content of the two-dimensional image on the first watch face interface is different from display content of the two-dimensional image on the second watch face interface.

With reference to FIG. 5, FIG. 7, and FIG. 9, in response to the touch operation, both a display orientation and a display shape of the shadow image 23 change.

In an embodiment, step (3) includes: determining a display region of the two-dimensional image based on the first operation, that is, determining the display region of the two-dimensional image on the second watch face display interface, to change the display region of the two-dimensional image.

For example, in response to the viewing angle change operation, the display region of the background image may be determined based on the operation parameter (for example, the line-of-sight rotation direction or angle) of the viewing angle change operation. For example, with reference to FIG. 14 and FIG. 15, in response to the viewing angle change operation, the display region of the background image changes.

In an embodiment, step (3) includes: determining a display shape of the two-dimensional image based on the first operation, that is, determining the display shape of the two-dimensional image on the second watch face display interface, to change the display shape of the two-dimensional image.

For example, in response to the touch operation, a display shape of the shadow image (an image used to reflect a shadow of the three-dimensional model) may be determined based on the operation parameter of the touch operation, so that the display shape of the shadow image matches the display orientation of the three-dimensional model. For example, with reference to FIG. 5, FIG. 7, and FIG. 9, in response to the touch operation, the display shape of the shadow image 23 changes.

In an embodiment, step (3) includes: determining a display orientation of the two-dimensional image based on the first operation, that is, determining the display position of the two-dimensional image on the second watch face display interface, to change the display orientation of the two-dimensional image.

For example, in response to the touch operation, the display orientation of the shadow image may be determined based on the operation parameter of the touch operation, so that the display orientation of the shadow image matches the display orientation of the three-dimensional model. For example, with reference to FIG. 10 to FIG. 12, in response to the touch operation, the display position of the shadow image 24 changes.

For example, in response to the viewing angle change operation, the display orientation of the shadow image may be determined based on the operation parameter of the viewing angle change operation. For example, with reference to FIG. 14 and FIG. 15, in response to the viewing angle change operation, a display position of the shadow image 23 changes.

For specific technical implementations and effects of the watch face display method provided in this embodiment of this application, refer to descriptions in other embodiments of this application. Details are not described herein again.

An embodiment of this application further provides a watch face display apparatus, including: an obtaining module, configured to obtain a watch face component, where the watch face component includes a three-dimensional model and a two-dimensional image; and a display module, configured to: display a first watch face interface based on the three-dimensional model and the two-dimensional image; and display a second watch face interface based on the three-dimensional model and the two-dimensional image in response to a first operation performed by a user on a watch face, where a display orientation of the three-dimensional model on the first watch face interface is different from a display orientation of the three-dimensional model on the second watch face interface.

An embodiment of this application further provides an electronic chip. The task processing chip is installed in an electronic device (UE). The electronic chip includes a processor, configured to execute computer program instructions stored in a memory. When the computer program instructions are executed by the processor, the electronic chip is triggered to perform the method steps provided in any method embodiment of this application.

An embodiment of this application further provides a terminal device. The terminal device includes a communication module, a memory configured to store computer program instructions, and a processor configured to execute the program instructions. When the computer program instructions are executed by the processor, the terminal device is triggered to perform the method steps provided in any method embodiment of this application.

An embodiment of this application further provides an electronic device. The electronic device includes a plurality of antennas, a memory configured to store computer program instructions, a processor configured to execute the computer program instructions, and a communication apparatus (for example, a communication module that may implement 5G communication based on an NR protocol). When the computer program instructions are executed by the processor, the electronic device is triggered to perform the method steps provided in any method embodiment of this application.

Specifically, in an embodiment of this application, one or more computer programs are stored in the memory, and the one or more computer programs include instructions. When the instructions are executed by the device, the device is enabled to perform the method steps in embodiments of this application.

Further, the device, apparatus, and module described in embodiments of this application may be specifically implemented by a computer chip or an entity, or may be implemented by a product having a specific function.

A person skilled in the art should understand that embodiments of this application may be provided as a method, an apparatus, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media that include computer-usable program code.

In embodiments of this application, when any one of the functions is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application.

Specifically, an embodiment of this application further provides a computer-readable storage medium. The computer-readable storage medium stores a computer program. When the computer program is run on a computer, the computer is enabled to perform the method steps provided in embodiments of this application.

An embodiment of this application further provides a computer program product. The computer program product includes a computer program. When the computer program is run on a computer, the computer is enabled to perform the method steps provided in embodiments of this application.

In several embodiments provided in this application, it should be understood that the disclosed system, apparatus, and method may be implemented in other manners. For example, the foregoing apparatus embodiments are merely examples. For example, division of the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between apparatuses or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of hardware in addition to a software functional unit.

The integrated unit implemented in a form of a software functional unit may be stored in a computer-readable storage medium. The software functional unit is stored in a storage medium and includes several instructions for instructing a computer apparatus (which may be a personal computer, a server, a network apparatus, or the like) or a processor (Processor) to perform a part of the steps of the methods described in embodiments of this application. The storage medium includes: any medium that can store program code, such as a USB flash disk, a removable hard disk, a read-only memory, a random access memory, a magnetic disk, or an optical disc.

In embodiments of this application, the term "comprise", "include", or any other variant thereof is intended to cover a non-exclusive inclusion, so that a process, a method, a product, or a device that includes a list of elements not only includes those elements but also includes other elements that are not expressly listed, or further includes elements inherent to such process, method, product, or device. In absence of more constraints, an element preceded by "includes a ..." does not preclude existence of other identical elements in the process, method, product, or device that includes the element.

This application can be described in the general context of computer-executable instructions, for example, a program module. Generally, the program module includes a routine, a program, an object, a component, a data structure, and the like for executing a specific task or implementing a specific abstract data type. Alternatively, this application may be practiced in distributed computing environments in which tasks are performed by remote processing devices that are connected through a communication network. In a distributed computing environment, program modules may be located in both local and remote computer storage media including storage devices.

A person of ordinary skill in the art may be aware that units and algorithm steps described in embodiments of this application may be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, mutual reference may be made for same or similar parts in embodiments of this application. For a specific working process of the system, apparatus, and unit described in embodiments of this application, refer to a corresponding process in method embodiments of this application. Details are not described herein again.

The foregoing descriptions are merely specific embodiments of this application, but are not intended to limit this application. The protection scope of this application is subject to the claims.

**Claims**

1. A watch face display method, comprising:

obtaining a watch face component, wherein the watch face component comprises a three-dimensional model and a two-dimensional image;

displaying a first watch face interface based on the three-dimensional model and the two-dimensional image; and

displaying a second watch face interface based on the three-dimensional model and the two-dimensional image in response to a first operation performed by a user on a watch face, wherein

a display orientation of the three-dimensional model on the first watch face interface is different from a display orientation of the three-dimensional model on the second watch face interface.

2. The method according to claim 1, wherein displaying the second watch face interface based on the three-dimensional model and the two-dimensional image in response to the first operation performed by the user on the watch face comprises:

obtaining an operation parameter of the first operation; and

determining the display orientation of the three-dimensional model based on the operation parameter.

3. The method according to claim 2, wherein the first operation comprises a touch operation, and an operation parameter of the touch operation comprises one or more of the following:

a displacement magnitude of a touch displacement of the touch operation;

a displacement direction of the touch displacement of the touch operation;

touch duration of the touch operation;

a touch area of the touch operation; and

touch pressure of the touch operation.

4. The method according to claim 3, wherein determining the display orientation of the three-dimensional model based on the operation parameter comprises:

determining an x-axis coordinate value and a y-axis coordinate value of the three-dimensional model in a specified coordinate system based on the displacement magnitude and the displacement direction; and

determining a z-axis coordinate value of the three-dimensional model in the specified coordinate system based on at least one of the touch duration, the touch area, and the touch pressure, wherein

a z-axis of the specified coordinate system is perpendicular to a display of the watch face.

5. The method according to claim 2, wherein the first operation comprises a viewing angle change operation, and an operation parameter of the viewing angle change operation comprises one or more of the following:

a line-of-sight rotation direction of the viewing angle change operation;

a line-of-sight rotation angle of the viewing angle change operation; and

a line-of-sight distance of the viewing angle change operation.

6. The method according to claim 5, wherein determining the display orientation of the three-dimensional model based on the operation parameter comprises:

determining a rotation direction of the three-dimensional model in a specified coordinate system based on the line-of-sight rotation direction;

determining a rotation angle of the three-dimensional model in the specified coordinate system based on the line-of-sight rotation angle; and

determining a z-axis coordinate value of the three-dimensional model in the specified coordinate system based on the line-of-sight distance, wherein

a z-axis of the specified coordinate system is perpendicular to a display of the watch face.

7. The method according to any one of claims 1 to 6, wherein displaying the second watch face interface based on the three-dimensional model and the two-dimensional image in response to the first operation performed by the user on the watch face comprises:

determining a display region of the two-dimensional image based on the first operation; and/or

determining a display shape of the two-dimensional image based on the first operation; and/or

determining a display orientation of the two-dimensional image based on the first operation.

8. The method according to any one of claims 1 to 6, wherein

   the three-dimensional model is used to display a foreground object; and
   the two-dimensional image comprises an image used to display a background object.

9. The method according to any one of claims 1 to 6, wherein

   the three-dimensional model is used to display a dynamic component; and
   the two-dimensional image is used to display a static component.

10. A watch face display apparatus, comprising:

    an obtaining module, configured to obtain a watch face component, wherein the watch face component comprises a three-dimensional model and a two-dimensional image; and
    a display module, configured to: display a first watch face interface based on the three-dimensional model and the two-dimensional image; and display a second watch face interface based on the three-dimensional model and the two-dimensional image in response to a first operation performed by a user on a watch face, wherein
    a display orientation of the three-dimensional model on the first watch face interface is different from a display orientation of the three-dimensional model on the second watch face interface.

11. An electronic chip, comprising:
    a processor, configured to execute computer program instructions stored in a memory, wherein when the computer program instructions are executed by the processor, the electronic chip is triggered to perform the method according to any one of claims 1 to 9.

12. An electronic device, wherein the electronic device comprises one or more memories configured to store computer program instructions, and one or more processors, and when the computer program instructions are executed by the one or more processors, the electronic device is triggered to perform the method according to any one of claims 1 to 9.

13. A computer-readable storage medium, wherein the computer-readable storage medium stores a computer program, and when the computer program is run on a computer, the computer is enabled to perform the method according to any one of claims 1 to 9.

14. A computer program product, wherein the computer program product comprises a computer program, and when the computer program is run on a computer, the computer is enabled to perform the method according to any one of claims 1 to 9.

Electronic device 100

Antenna 1                                      Antenna 2

| Mobile communication module<br>2G/3G/4G/5G<br>[150] | Wireless communication module<br>BT/WLAN/GNSS/NFC/IR/FM<br>[160] |

| Speaker<br>[170A] | | | Sensor module<br>[180] |

| | Audio<br>module<br>[170] | | Button [190] |

| Microphone<br>[170C] | | | Motor [191] |

Processor
[110]

| Internal memory [121] | | Cameras 1 to N<br>[193] |

| Power management<br>module [141] | | Displays 1 to N<br>[194] |

| Charging management<br>module [140] | | SIM card interfaces<br>1 to N [195] |

FIG. 1

FIG. 2

FIG. 3

FIG. 4

212

211

221

222

223

23

FIG. 5

FIG. 6

FIG. 7

FIG. 8

FIG. 9

22

24

FIG. 10

FIG. 11

**EP 4 733 909 A1**

FIG. 12

34

FIG. 13

FIG. 14

FIG. 15

## INTERNATIONAL SEARCH REPORT

| International application No. |
| --- |
| **PCT/CN2024/097673** |

**A. CLASSIFICATION OF SUBJECT MATTER**

G06F 3/0481(2022.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, ENTXTC, WOTXT, USTXT, CNKI, IEEE: 前景, 动态, 动画, 背景, 静态, 三维, 二维, 手表, 表盘, Foreground, dynamic, animation, background, static, 3D, 2D, watch

**C. DOCUMENTS CONSIDERED TO BE RELEVANT**

| Category* | Citation of document, with indication, where appropriate, of the relevant passages | Relevant to claim No. |
| --- | --- | --- |
| Y | CN 114363528 A (GUANGDONG OPPO MOBILE TELECOMMUNICATIONS CORP., LTD.) 15 April 2022 (2022-04-15) <br> description, paragraphs [34]-[53] | 1-14 |
| Y | CN 105678829 A (SUZHOU MEIGU SHIDIAN SOFTWARE TECHNOLOGY CO., LTD.) 15 June 2016 (2016-06-15) <br> description, paragraphs [6]-[25] | 1-14 |
| A | CN 110223367 A (TENCENT TECHNOLOGY (SHENZHEN) CO., LTD.) 10 September 2019 (2019-09-10) <br> entire document | 1-14 |
| A | CN 112190943 A (NETEASE (HANGZHOU) NETWORK CO., LTD.) 08 January 2021 (2021-01-08) <br> entire document | 1-14 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 August 2024** | **15 August 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/097673**

| Patent document cited in search report | | | Publication date (day/month/year) | Patent family member(s) | | | Publication date (day/month/year) |
|---|---|---|---|---|---|---|---|
| CN | 114363528 | A | 15 April 2022 | WO | 2022078054 | A1 | 21 April 2022 |
| CN | 105678829 | A | 15 June 2016 | None | | | |
| CN | 110223367 | A | 10 September 2019 | None | | | |
| CN | 112190943 | A | 08 January 2021 | None | | | |

Form PCT/ISA/210 (patent family annex) (July 2022)

**REFERENCES CITED IN THE DESCRIPTION**

**Patent documents cited in the description**

- CN 202311333224X